(19) Europäisches Patentamt
European Patent Office
Office européen des brevets

(11) EP 4 207 630 A1

(12) # EUROPEAN PATENT APPLICATION
published in accordance with Art. 153(4) EPC

(43) Date of publication:
**05.07.2023 Bulletin 2023/27**

(21) Application number: **21879255.4**

(22) Date of filing: **29.09.2021**

(51) International Patent Classification (IPC):
***H04B 7/185*** *(2006.01)* ***H04L 27/00*** *(2006.01)*
***H04L 27/34*** *(2006.01)*

(52) Cooperative Patent Classification (CPC):
**H04B 7/185; H04L 27/00; H04L 27/34**

(86) International application number:
**PCT/CN2021/121506**

(87) International publication number:
**WO 2022/078209 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020 CN 202011106681**

(71) Applicant: **Huawei Technologies Co., Ltd.**
**Shenzhen, Guangdong 518129 (CN)**

(72) Inventors:
- **WANG, Xiaolu**
  **Shenzhen, Guangdong 518129 (CN)**
- **LUO, Hejia**
  **Shenzhen, Guangdong 518129 (CN)**
- **LI, Rong**
  **Shenzhen, Guangdong 518129 (CN)**
- **WANG, Jun**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD AND COMMUNICATION APPARATUS**

(57) This application provides a communication method. A network device broadcasts/sends a value of N (a transmit end performs N-point IDFT) and a maximum Doppler frequency shift value $f_d$ of an area in which a terminal device is located to the terminal device. Both the network device and the terminal device perform corresponding encoding and decoding on sent data and received data based on a two-dimensional reordered pattern determined by the value of N and $f_d$. By randomizing a Doppler effect, anti-Doppler effect performance is improved in a low-complexity manner.

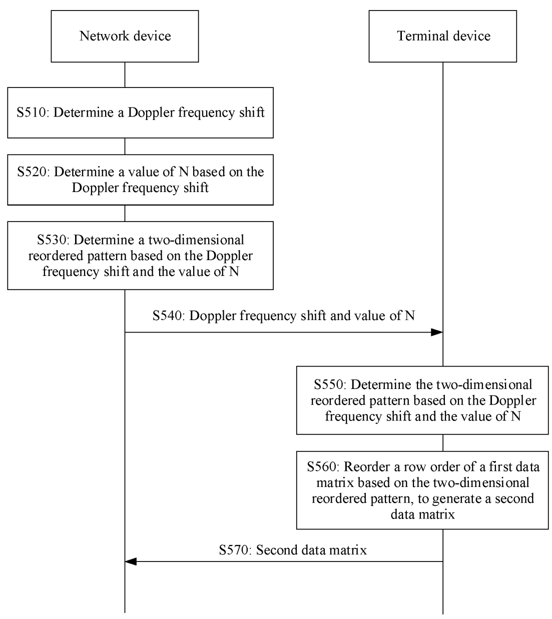


FIG. 5

EP 4 207 630 A1

## Description

This application claims priority to Chinese Patent Application No. 202011106681.1, filed with the China National Intellectual Property Administration on October 16, 2020 and entitled "COMMUNICATION METHOD AND COMMUNICATION APPARATUS", which is incorporated herein by reference in its entirety.

## TECHNICAL FIELD

This application relates to the communication field, and specifically, to a communication method and a communication apparatus.

## BACKGROUND

In recent years, with development of a low earth orbit (low earth orbit, LEO) satellite constellation technology, broadband communication services and Internet access or data transmission are provided for users by using satellites instead of lines provided by telecommunication operators. Satellite Internet is not restricted by terrains and regions, and can implement global coverage of network access and signal transmission. A LEO satellite has advantages of low delay, a high rate, and wide coverage, and can efficiently cover the air, an ocean, and a remote area, forming an effective supplement to a terrestrial network.

However, because a speed of the LEO satellite relative to the ground is 7.6 km/s, an obvious Doppler (Doppler) frequency shift occurs in a satellite signal received by user equipment (user equipment, UE) or a UE signal received by the satellite. In an initial access phase, even if a pre-compensated/post-compensated frequency shift solution is used, residual Doppler of different degrees may exist in signals received by UEs at different locations in a beam, affecting decoding performance.

## SUMMARY

This application provides a communication method, to improve anti-Doppler effect performance in a low-complexity manner.

According to a first aspect, a communication method is provided. The method includes: A terminal device receives a Doppler frequency shift value and a value of N that are sent by a network device, where the Doppler frequency shift value is a maximum Doppler frequency shift value of an area in which the terminal device is located, and the value of N is determined by the network device based on the Doppler frequency shift value; the terminal device performs, based on the value of N, $M \times N$-point inverse discrete Fourier transform IDFT processing on a QAM signal generated after quadrature amplitude modulation QAM mapping is performed on first information, to obtain a first data matrix, where the first data matrix is a data matrix with N rows and M columns, and N and M are positive integers; the terminal device determines a two-dimensional reordered pattern based on the Doppler frequency shift value and the value of N, where the two-dimensional reordered pattern is used to reorder a row order of the first data matrix; the terminal device reorders the row order of the first data matrix based on the two-dimensional reordered pattern, to generate a second data matrix; and the terminal device sends the second data matrix to the network device.

It should be understood that the area in which the terminal device is located may be a range of a beam or a cell in which the terminal device is located. This is not specifically limited in this application.

In the foregoing technical solution, the terminal device receives the value of N (a transmit end performs N-point IDFT) and the maximum Doppler frequency shift value $f_d$ of the area in which the terminal device is located that are broadcast/sent by the network device, and the terminal device correspondingly encodes sent data based on the two-dimensional reordered pattern determined by received data. By randomizing a Doppler effect, the method improves anti-Doppler effect performance in a low-complexity manner.

With reference to the first aspect, in some implementations of the first aspect, the terminal device performs M-point discrete Fourier transform DFT processing on each row of data in the second data matrix, to obtain a third data matrix; and the terminal device sends the third data matrix to the network device.

With reference to the first aspect, in some implementations of the first aspect, the terminal device performs M-point IDFT processing on each row of data in the third data matrix, or the terminal device performs N x M-point IDFT processing on all data in the third data matrix, to obtain a fourth data matrix; and the terminal device sends the fourth data matrix to the network device.

According to a second aspect, a communication method is provided. The method includes: A network device determines a Doppler frequency shift value, where the Doppler frequency shift value is a maximum Doppler frequency shift value of an area in which a terminal device is located; and the network device determines a value of N based on the Doppler frequency shift value, where the N value is used to determine a quantity of rows in a first data matrix, the first data matrix is a data matrix obtained by performing M x N-point inverse discrete Fourier transform IDFT processing on a QAM signal generated after quadrature amplitude modulation QAM mapping is performed by the terminal device on first information, the first data matrix is a matrix with N rows and M columns, and both N and M are positive integers; the network device determines a two-dimensional reordered pattern based on the Doppler frequency shift value and the value of N, where the two-dimensional reordered pattern is used to reorder a row order of the N-row data matrix; and the network device sends the Doppler frequency shift value and the value of N to the terminal device.

In the foregoing technical solution, the network device may configure a value of N at a level of UE, a beam (beam), or a cell (cell) for the terminal device based on the maximum Doppler frequency shift value of the area in which the terminal device is located, and select an appropriate value of N to avoid a long processing delay. By performing two-dimensional reordering on a transmitted data matrix, the method randomizes a Doppler effect, and improves anti-Doppler effect performance in a low-complexity manner.

With reference to the second aspect, in some implementations of the second aspect, the network device receives a second data matrix sent by the terminal device, where the second data matrix is generated by the terminal device by reordering a row order of the first data matrix based on the two-dimensional reordered pattern; and the network device performs reverse reordering on a row order of the second data matrix based on the two-dimensional reordered pattern, to obtain the first data matrix; and the network device performs N-point DFT processing on each column of the first data matrix, to obtain the QAM signal; and the network device performs QAM demapping on the QAM signal to obtain the first information.

With reference to the second aspect, in some implementations of the second aspect, the network device receives a third data matrix sent by the terminal device, where the third data matrix is obtained by performing M-point discrete Fourier transform DFT processing on each row of data in the second data matrix; and the network device performs M-point IDFT processing on each row of data in the third data matrix, to obtain the second data matrix.

With reference to the second aspect, in some implementations of the second aspect, the network device receives a fourth data matrix sent by the terminal device, where the fourth data matrix is a data matrix obtained by performing M-point IDFT processing on each row of data in the third data matrix or performing N x M-point IDFT processing on all data in the fourth data matrix; and the network device performs DFI processing based on the IDFT transformation manner used to obtain the fourth data matrix, to obtain the third data matrix.

According to a third aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units corresponding to the foregoing functions, for example, a processing unit.

According to a fourth aspect, this application provides a communication apparatus. The communication apparatus has a function of implementing the method according to any one of the second aspect or the possible implementations of the second aspect. The function may be implemented by hardware, or may be implemented by hardware executing corresponding software. The hardware or the software includes one or more units corresponding to the foregoing functions, for example, a processing unit, a receiving unit, and a sending unit.

According to a fifth aspect, this application provides a communication device. The communication device includes at least one processor, and the at least one processor is coupled to at least one memory. The at least one memory is configured to store a computer program or instructions. The at least one processor is configured to invoke the computer program or the instructions from the at least one memory and run the computer program or the instructions, so that the communication device performs the method according to any one of the first aspect or the possible implementations of the first aspect.

In an example, the communication device may be a terminal device.

In an example, the communication device may be a chip, a chip system, or a circuit used in a terminal device.

According to a sixth aspect, this application provides a communication device. The communication device includes at least one processor, and the at least one processor is coupled to at least one memory. The at least one memory is configured to store a computer program or instructions. The at least one processor is configured to invoke the computer program or the instructions from the at least one memory and run the computer program or the instructions, so that the communication device performs the method according to any one of the second aspect or the possible implementations of the second aspect.

In an example, the communication device may be a network device.

In an example, the communication device may be a chip, a chip system, or a circuit used in a network device.

According to a seventh aspect, this application provides a computer-readable storage medium. The computer-readable storage medium stores computer instructions, and when the computer instructions are run on a computer, the method according to any one of the first aspect or the possible implementations of the first aspect is performed.

According to an eighth aspect, this application provides a computer-readable storage medium. The computer-readable storage medium stores computer instructions, and when the computer instructions are run on a computer, the method according to any one of the second aspect or the possible implementations of the second aspect is performed.

According to a ninth aspect, this application provides a computer program product. The computer program product includes computer program code. When the computer program code is run on a computer, the method according to any one of the first aspect or the possible implementations of the first aspect is performed.

According to a tenth aspect, this application provides a computer program product. The computer program product includes computer program code. When the computer program code is run on a computer, the method according to any one of the second aspect or the possible implementations of the second aspect is performed.

According to an eleventh aspect, this application provides a chip, including a processor and a communication interface. The communication interface is configured to receive a signal and transmit the signal to the processor, and the processor processes the signal, so that the method according to any one of the first aspect or the possible implementations of the first aspect is performed.

According to a twelfth aspect, this application provides a chip, including a processor and a communication interface. The communication interface is configured to receive a signal and transmit the signal to the processor, and the processor processes the signal, so that the method according to any one of the second aspect or the possible implementations of the second aspect is performed.

According to a thirteenth aspect, this application provides a communication system, including the communication device according to the fifth aspect and the sixth aspect.

## BRIEF DESCRIPTION OF DRAWINGS

FIG. 1 is a schematic diagram of an architecture of NTN communication;
FIG. 2 is a schematic block diagram of an SC system;
FIG. 3 is a schematic block diagram of an OFDM system;
FIG. 4 is a comparison diagram of bit error rate performance of an SC system and an OFDM system;
FIG. 5 is a schematic flowchart of a communication method according to this application;
FIG. 6 is a schematic block diagram of modulation and demodulation of a QAM signal according to this application;
FIG. 7 is a schematic flowchart of another communication method according to this application;
FIG. 8 is a schematic block diagram of modulation and demodulation of another QAM signal according to this application;
FIG. 9 is a schematic flowchart of still another communication method according to this application;
FIG. 10 is a schematic block diagram of modulation and demodulation of still another QAM signal according to this application;
FIG. 11 is a schematic block diagram of a communication apparatus 1000 according to this application;
FIG. 12 is a schematic block diagram of a communication apparatus 2000 according to this application;
FIG. 13 is a schematic diagram of a structure of a communication apparatus 10 according to this application; and
FIG. 14 is a schematic diagram of a structure of a communication apparatus 20 according to this application.

## DESCRIPTION OF EMBODIMENTS

The following describes the technical solutions of this application with reference to the accompanying drawings.

The technical solutions of this application may be applied to a non-terrestrial network (non-terrestrial network, NTN) system such as a satellite communication system or a high-altitude platform station (high-altitude platform station, HAPS) communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), or a mobile communication system in the future.

FIG. 1 is a schematic diagram of an architecture of NTN communication. As shown in FIG. 1, satellite communication is used as an example. In this scenario, a gateway (gateway, GW), a satellite, user equipment (user equipment, UE), and the like may be included. A gateway in an NTN system can provide a function similar to that provided by a gateway in a terrestrial communication system, for example, establishing a connection to UE and communicating with a server. For distinction from the terrestrial communication system, the gateway is referred to as a gateway herein. The gateway also has functions such as monitoring and fault query for a satellite, and packet switching and interface protocol conversion for communication data. The gateway is connected to a core network. A link between the gateway and the satellite is referred to as a feeder link (feeder link). A link between the satellite and the user equipment is referred to as a service link (service link). When the satellite works in a transparent (transparent) mode, the satellite has a relay forwarding function, and can perform radio frequency filtering and amplification to regenerate a signal. The gateway has all or some functions of a base station, and may be considered as a base station. When the satellite works in a regeneration (regenerative) mode, the satellite has a data processing capability, and all or some functions of a base station; and the satellite may be considered as a base station.

It should be understood that the UE may be various mobile terminals, for example, a mobile satellite phone or a high-altitude aircraft, or may be various fixed terminals, for example, a communication terrestrial station.

The terminal may be a wireless terminal or a wired terminal. The wireless terminal may be a device that provides a user with voice and/or data connectivity, a handheld device having a wireless connection function, or another processing device connected to a wireless modem. The wireless terminal may communicate with one or more core networks through a radio access network (radio access network, RAN). The wireless terminal may be a mobile terminal, for example, a mobile phone (or also referred to as a "cellular" phone), and a computer having a mobile terminal. For example, the wireless terminal may be a portable, pocket-sized, handheld, computer-built-in or vehicle-mounted mobile apparatus, which exchanges languages and/or data with the radio access network. For example, the wireless terminal may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a mobile (Mobile), a remote station (remote station, RS), an access point (access point, AP), a remote terminal (remote terminal, RT), an access terminal (access terminal, AT), user equipment (user terminal, UT), a user agent (user agent, UA), and a terminal device (user device, UD). A terminal device represented by a satellite phone or a vehicle-mounted satellite system may directly communicate with a satellite. A fixed terminal represented by a terrestrial communication station can communicate with a satellite only after being relayed by a terrestrial station. The terminal device sets and obtains a communication status by installing a wireless transceiver antenna, to complete communication.

It should be understood that FIG. 1 describes an example of the NTN communication scenario. An example in which a network device in this embodiment of this application is a satellite is used. However, the network device in this embodiment of this application is not limited thereto. The network device in this application may alternatively be a gateway, a high-altitude platform station, or an uncrewed aerial vehicle in NTN communication, or a terminal device that functions as a base station in D2D communication, or the like.

Currently, a common communication system is a single carrier (single carrier, SC) solution and a multi-carrier (multi-carrier, MC) solution. For example, the multi-carrier solution in this application may be an orthogonal frequency division multiplexing (orthogonal frequency division multiplexing, OFDM) technology.

FIG. 2 and FIG. 3 are respectively schematic block diagrams of an SC system and an OFDM system. To compare differences between the SC system and the OFDM system, same modules of the two systems are omitted. It can be learned that a transmit end in the OFDM system performs inverse discrete Fourier transform (inverse discrete Fourier transform, IDFT) processing on a quadrature amplitude modulation (quadrature amplitude modulation, QAM) signal before sending, but a QAM signal is directly sent in the SC system. Correspondingly, a receive end in the OFDM system performs discrete Fourier transform (discrete Fourier transform, DFT) processing on a received signal, but a receive end in the SC system does not need to perform DFT processing on a signal.

Refer to FIG. 4. FIG. 4 is a comparison diagram of bit error rate (bit error rate, BER) performance of an SC system and an OFDM system. Simulation conditions are: a symbol length being 512; constellation mapping QPSK; residual Doppler = 0.83335 ppm; a carrier frequency f = 2 GHz; and a subcarrier spacing (subcarrier spacing, SCS) = 60 KHz. It can be learnt from a simulation result that the residual Doppler affects the BER performance of the SC system and the OFDM systems greatly, and the performance deteriorates greatly. It can be learnt that the BER performance of the SC system and OFDM system severely deteriorates when a Doppler shift exists.

In view of this, this application provides an enhanced modulation and demodulation method, to improve anti-Doppler effect performance. The following describes technical solutions in this application in detail.

FIG. 5 is a schematic flowchart of a communication method according to this application.

S510: A network device determines a maximum Doppler frequency shift value $f_d$ (unit: hertz) of an area in which a terminal device is located.

For example, $f_d$ may be determined based on a relationship between a relative location relationship and a relative speed relationship between a satellite and a range of a beam or a cell in which the terminal device is located.

It should be understood that the area in which the terminal device is located may be the range of the beam or the cell in which the terminal device is located. This is not specifically limited in this application.

S520: The network device determines a value of N based on the maximum Doppler frequency shift value $f_d$, where N is a positive integer.

Optionally, a value range of N may be obtained according to a formula $N \geq 1/(1 - f_d \times T)$ (1), and an appropriate value of N is selected from the value range. T (unit: second) indicates a length of a symbol (symbol) when data is sent (where it is assumed that one symbol has M sampling point lengths). For example, the maximum Doppler frequency shift value $f_d$ = 0.83335 ppm (f = 2 GHZ, SCS = 60 KHz), T = 4.16 $\times$ $e^{-6}$, and the value of N may be 4 according to the formula (1).

Optionally, the network device may select an appropriate value of N from the value range of N by comprehensively considering indicators such as complexity and a processing delay.

S530: The network device determines a two-dimensional reordered pattern (pattern) (that is, reordering of rows of a data matrix) based on the value of N and the value of $f_d$, as shown in the following formula:

$$\underset{pattern \in \varphi(N)}{\arg\max} \left[ \sum_{\mathbf{a} \in \phi} \mathrm{DFT}[depattern(pattern(\mathrm{IDFT}[a]) * f_d)] - threshold \right] \quad (2)$$

argmax(f(x)) is a variable x corresponding to a maximum value of f(x), and φ represents a constellation mapping table of a transmission signal. "a" represents a possible transmission signal vector. "threshold" represents a signal decision threshold (where a decision threshold may be agreed upon between a network side and UE, for example, the threshold may be 0, 1.5, or -1). "pattern" represents a pattern of performing two-dimensional reordering on the transmit signal, and two-dimensional reordering refers to exchanging locations of two rows of data in an N-row data matrix. "depattern" represents a pattern of performing two-dimensional inverse reordering processing on a received signal. $\varphi(N)$ represents a possible different reordering combination of N rows of the data matrix. For example, the network device determines a two-dimensional reordered pattern (pattern) based on N = 4, $f_d$ = 0.83335 ppm, and the formula (2), and determines that a maximum value is obtained in the formula (2) when row sorting is changed to 3, 2, 1, and 4. To be specific, original 3rd/2nd/1st/4th rows are used as 1st/2nd/3rd/4th rows of a reordered matrix, that is, the first row and the third row are exchanged.

S540: The terminal device receives the value of N and the value of $f_d$ that are sent by the network device.

Correspondingly, the network device sends the value of N and the value of $f_d$ to the terminal device.

S550: The terminal device determines a two-dimensional reordered pattern (pattern) based on the value of N and the value of $f_d$.

It should be understood that the two-dimensional reordered pattern (pattern) determined by the terminal device is the same as that determined by the network device.

Optionally, the network device may further directly send the determined two-dimensional reordered pattern (pattern) to the terminal device, to reduce calculation overheads of the terminal device.

S560: The terminal device reorders a row order of a first data matrix based on the two-dimensional reordered pattern, to generate a second data matrix.

The terminal device performs quadrature amplitude modulation (quadrature amplitude modulation, QAM) mapping on a source information bit (bit) (namely, an example of first information), to obtain QAM information. After M x N-point IDFT transform processing (where M is a positive integer) is performed on the QAM signal, the first data matrix with N rows and M columns is obtained. The terminal device performs two-dimensional reordering processing on the first data matrix based on the two-dimensional reordered pattern, to obtain the second data matrix. The following uses an example to describe this step.

FIG. 6 is a schematic block diagram of modulation and demodulation of the QAM signal according to this application.

① The terminal device forms an N-row and M-column matrix A (namely, an example of the first data matrix) by using data obtained through M x N-point IDFT transform, where data obtained through N-point IDFT transform is used as a column.

As shown in FIG. 6, N = M = 4 is used as an example for description. [A1 B1 C1 D1], [A2 B2 C2 D2], [A3 B3 C3 D3], and [A4 B4 C4 D4] are separately data obtained through N-point IDFT transform, (where N = 4), and the matrix A is obtained after the data obtained through the foregoing IDFT transform is used as a column. The following steps are described by using the matrix A as an example.

② The terminal device performs a two-dimensional reordering operation on the matrix A based on the two-dimensional reordered pattern, that is, reorders rows of the matrix A to obtain a matrix B (namely, an example of the second data matrix). For example, as shown in FIG. 6, the terminal device switches locations of a first row and a third row in the matrix Abased on the determined two-dimensional reordered pattern, to obtain the matrix B.
(3) Optionally, the terminal device then performs M-point DFT processing on each row of the matrix B to obtain a matrix C (namely, an example of a third data matrix), and sends the matrix C to the network device. For example, in FIG. 5, M-point DFT (where M = 4) is separately performed on [C1 C2 C3 C4], [B1 B2 B3 B4], [A1 A2 A3 A4], and [D1 D2 D3 D4] in the matrix B, to obtain the matrix C, and then each row of the matrix C is sent to the network device as a symbol.

Optionally, the terminal device may add a CP before each symbol with a length of M.

Optionally, the terminal device may alternatively add a CP before N symbols each with a length of M.

S570: The terminal device sends the second data matrix to the network device.

Correspondingly, the network device receives the second data matrix, and performs corresponding inverse processing on the received data.

Optionally, if the third data matrix (for example, the matrix C) is generated in S560, the terminal device sends the third data matrix to the network device.

Correspondingly, the network device receives the third data matrix, and performs corresponding inverse processing on the received data.

An example in which the terminal device sends the matrix C (namely, the third data matrix) to the network device is used for description herein. Specific steps in which the network device performs inverse processing on the matrix C are as follows:

① The network device uses received symbols as rows of the matrix to obtain the matrix C with N rows and M columns, and performs M-point IDFT processing on each row of data in the matrix C to obtain a matrix D.

(2) The network device performs two-dimensional inverse reordering processing on the matrix D based on the two-dimensional reordered pattern, that is, performs inverse reordering on rows of the matrix D to obtain a matrix E. As shown in FIG. 6, the network device switches locations of a first row and a third row in the matrix C based on the determined two-dimensional reordered pattern, to obtain the matrix E.

It should be understood that, when interference and noise are ignored, the demodulated matrix D is equal to the matrix B, and the demodulated matrix E is equal to the matrix A.

(3) The network device performs N-point DFT on each column of the matrix E obtained after two-dimensional inverse reordering processing, to obtain the QAM signal.

④ The network device performs constellation demapping processing on the QAM signal to obtain the source information bit (bit) (namely, an example of the first information) sent by the terminal device.

In the foregoing embodiment, the network device and the terminal device perform calculation based on the value of N and the value of $f_d$ to obtain the reordered pattern (pattern). Optionally, the network side may directly send the reordered pattern and the value of N to the UE instead of sending the value of $f_d$. That is, the network side obtains the reordered pattern (pattern) based on the value of N and the value of $f_d$, and the network side directly sends the pattern to the UE.

By randomizing a Doppler effect, this method can significantly improve BER performance of a system, and improve an ability of the system to resist Doppler interference in a low-complexity manner. In addition, the network side may configure a value of N at a UE/beam (beam)/cell (cell) level based on $f_d$ in different ranges of the UE, and select an appropriate value of N, to avoid a long processing delay.

Optionally, based on the foregoing embodiment, this application further provides another enhanced modulation and demodulation method. A difference from the foregoing embodiment lies in that an IDFT operation and a DFT operation are separately added to a transmit end of a terminal device and a receive end of a network device. The added IDFT operation and DFT operation may be M-point transform or M x N-point transform.

FIG. 7 is a schematic flowchart of another communication method according to this application.

S710 to S730 in the modulation and demodulation method are the same as S540 to S560 in the foregoing embodiment. Details are not described herein again. Only different steps are described herein.

S740: The terminal device performs IDFT processing on the matrix C to obtain a matrix F. Specific steps are shown in FIG. 8.

FIG. 8 is a schematic block diagram of modulation and demodulation of another QAM signal according to this application.

Optionally, as shown in FIG. 8, the terminal device performs N x M-point IDFT transform on each piece of data [C1 C2 C3 C4 B1 B2 B3 B4 A1 A2 A3 A4 D1 D2 D3 D4] in the matrix C to obtain the matrix F (namely, an example of a fourth data matrix), and then sends the matrix F to the network device. Optionally, the matrix F is sent by using each row of the matrix F as a symbol whose length is M = 4, or the matrix F is sent by using a symbol whose length is N x M = 16 and that is successively formed by each row of the matrix F.

Optionally, the terminal device performs M-point IDFT transform (where M = 4) on each row of data [C1 C2 C3 C4], [B1 B2 B3 B4], [A1 A2 A3 A4], and [D1 D2 D3 D4] in the matrix C, to obtain the matrix F (namely, another example of the fourth data matrix).

Optionally, the terminal device may add a cyclic prefix before N transformed symbols with a length of M.

Optionally, the terminal device may add a cyclic prefix to each transformed symbol whose length is M.

S750: The terminal device sends the matrix F to the network device.

Correspondingly, the network device receives the matrix F sent by the terminal device, and performs corresponding inverse processing on the received data. Steps of performing reverse processing by the network device are as follows:

After receiving the matrix F, the network device performs N x M-point DFT transform or M-point DFT transform on the matrix F based on the IDFT transform manner used by the terminal device to generate the matrix F, to obtain the matrix C.

Subsequent inverse processing of the matrix C is the same as the description of the inverse processing of the matrix C in the embodiment in FIG. 5, and details are not described herein again.

Optionally, the two-dimensional reordering processing may alternatively be implemented by matrix multiplication. The following describes the method in detail.

FIG. 9 is a schematic flowchart of still another communication method according to this application.

S910: A network device sends a two-dimensional reordered pattern matrix to a terminal device.

Optionally, the network device may further send a sequence number of the two-dimensional reordered pattern matrix to the terminal device, and the terminal device determines the two-dimensional reordered pattern matrix based on the sequence number of the two-dimensional reordered pattern matrix.

Correspondingly, the terminal device receives the pattern matrix or the sequence number of the pattern matrix sent by the network device. As an example rather than a limitation, the pattern matrix is used as an example for description in this application.

S920: The terminal device multiplies a first data matrix by the two-dimensional reordered pattern matrix, and reorders a row order of the first data matrix, to generate a second data matrix.

The terminal device performs quadrature amplitude modulation (quadrature amplitude modulation, QAM) mapping on a source information bit (bit) (namely, an example of first information), to obtain a QAM signal. After M x N-point IDFT transform processing is performed on the QAM signal, the first data matrix with N rows and M columns is obtained. The terminal device multiplies the first data matrix by the two-dimensional reordered pattern matrix, and performs two-dimensional reordering processing, to obtain the second data matrix. The following uses an example to describe this step.

FIG. 10 is a schematic block diagram of modulation and demodulation of still another QAM signal according to this application.

① As shown in FIG. 10, N = M = 4 is used as an example. Data obtained by performing M x N-point IDFT transform (M is a positive integer) forms a column vector A = [A1 A2 A3 A4 B1 B2 B3 B4 C1 C2 C3 C4 D1 D2 D3 D4] (namely, an example of the first data matrix) with a length of N × M, where [ ] represents transpose. [A1 B1 C1 D1], [A2 B2 C2 D2], [A3 B3 C3 D3], and [A4 B4 C4 D4] are data obtained after N-point IDFT transform. It should be understood that in this embodiment, the column vector A is merely used as an example for description, and the data obtained by performing the N-point IDFT transformation may also be a row vector, or may be in a matrix form. This is not specifically limited in this application.

② The two-dimensional reordered pattern matrix H is multiplied by the vector A to obtain a to-be-sent column vector B with a length of N x M (namely, an example of the second data matrix), where the matrix H is a matrix with N x M = 16 rows and N x M = 16 columns. An example in which original $4^{th}/2^{nd}/1^{st}/3^{rd}$ rows are used as $1^{st}/2^{nd}/3^{rd}/4^{th}$ rows of the reordered matrix is used to describe the two-dimensional reordered pattern matrix H. The matrix H is specifically as follows:

$$H = \begin{bmatrix} 0&0&0&1&0&0&0&0&0&0&0&0&0&0&0&0 \\ 0&0&0&0&0&0&0&1&0&0&0&0&0&0&0&0 \\ 0&0&0&0&0&0&0&0&0&0&0&1&0&0&0&0 \\ 0&0&0&0&0&0&0&0&0&0&0&0&0&0&0&1 \\ 0&1&0&0&0&0&0&0&0&0&0&0&0&0&0&0 \\ 0&0&0&0&0&1&0&0&0&0&0&0&0&0&0&0 \\ 0&0&0&0&0&0&0&0&0&1&0&0&0&0&0&0 \\ 0&0&0&0&0&0&0&0&0&0&0&0&0&1&0&0 \\ 1&0&0&0&0&0&0&0&0&0&0&0&0&0&0&0 \\ 0&0&0&0&1&0&0&0&0&0&0&0&0&0&0&0 \\ 0&0&0&0&0&0&0&0&1&0&0&0&0&0&0&0 \\ 0&0&0&0&0&0&0&0&0&0&0&0&1&0&0&0 \\ 0&0&1&0&0&0&0&0&0&0&0&0&0&0&0&0 \\ 0&0&0&0&0&0&1&0&0&0&0&0&0&0&0&0 \\ 0&0&0&0&0&0&0&0&0&0&1&0&0&0&0&0 \\ 0&0&0&0&0&0&0&0&0&0&0&0&0&0&1&0 \end{bmatrix}$$

$$B = H \times A = [D1\ D2\ D3\ D4\ B1\ B2\ B3\ B4\ A1\ A2\ A3\ A4\ C1\ C2\ C3\ C4].$$

(3) Optionally, the terminal device then performs M-point DFT processing on the vector B, to obtain a vector C (namely, an example of the third data matrix).

Optionally, the column vector C may be divided into N symbol blocks for sending, that is, four symbol blocks [D1 D2 D3 D4], [C1 C2 C3 C4], [B1 B2 B3 B4], and [A1 A2 A3 A4] in the vector B are sent after M-point DFT processing.

Optionally, the column vector C is sent as one data block, that is, four symbol blocks [D1 D2 D3 D4], [C1 C2 C3 C4], [B1 B2 B3 B4], and [A1 A2 A3 A4] in the vector B are sent as one data block after M-point DFT processing.

Optionally, the terminal device may add a CP before each symbol with a length of M.

Optionally, the terminal device may alternatively add a CP before N symbols each with a length of M.

S930: The terminal device sends the second data matrix to the network device.

Correspondingly, the network device receives the second data matrix, and performs corresponding inverse processing on the received data.

Optionally, if the third data matrix (for example, the vector C) is generated in S560, the terminal device sends the third data matrix to the network device.

Correspondingly, the network device receives the third data matrix, and performs corresponding inverse processing on the received data.

An example in which the terminal device sends the vector C (namely, the third data matrix) to the network device is used for description herein. As shown in FIG. 10, specific steps in which the network device performs inverse processing on the vector C are as follows:

① The network device receives the vector C, and performs M-point IDFT processing on data of the vector C, to obtain a vector D.

(2) The network device performs two-dimensional inverse reordering processing on the vector D. Specifically, the received column vector D with a length of $N \times M$ is multiplied by a two-dimensional inverse reordered matrix $H^H$, to obtain a two-dimensional column vector E obtained after two-dimensional inverse reordering processing, where $[\cdot]^H$ represents conjugate transpose.

For ease of description, interference and noise are ignored. The received vector D is equal to the vector B sent by the terminal device, that is, D = B = [D1 D2 D3 D4 B1 B2 B3 B4 A1 A2 A3 A4 C1 C2 C3 C4], and E = $H^H$ x C = [A1 B1 C1 D1 A2 B2 C2 D2 A3 B3 C3 D3 A4 B4 C4 D4].

It should be understood that two-dimensional reordering in this application is used to exchange two rows of data in the data matrix. During actual implementation, when reordering processing is performed on the data matrix, L (L is less than or equal to N) rows of data in the data matrix may alternatively be exchanged. This is not specifically limited in this application.

It should be understood that, in the foregoing embodiment, that N represents a row of the matrix, and M represents a column of the matrix is used for description. Similarly, that N may alternatively represent a quantity of columns of the matrix, and M may represent a quantity of rows of the matrix is used for signal processing. To be specific, data obtained through M x N-point IDFT transform forms a matrix with M rows and N columns, where data obtained through N-point IDFT transform is used as a row of the matrix. When a transmit end sends data, after M-point DFT is performed on each column of the matrix signal, each column may be used for sending one symbol.

It should be understood that a sequence of IDFT processing and DFT processing at the transmit end may be interchanged. Correspondingly, a sequence of IDFT processing and DFT processing at a receive end during decoding also need to be interchanged.

It should be noted that, in the technical solutions in this application, an example in which the terminal device sends data to the network device is used for description. During actual communication, the technical solutions may also be applied to a scenario in which the network device sends data to the terminal device.

The foregoing describes in detail the communication method provided in this application, and the following describes a communication apparatus provided in this application.

FIG. 11 is a schematic block diagram of a communication apparatus 1000 according to this application. As shown in FIG. 11, the communication apparatus 1000 includes a receiving unit 1100, a processing unit 1200, and a sending unit 1300.

The receiving unit 1100 is configured to receive a Doppler frequency shift value and a value of N that are sent by a network device, where the Doppler frequency shift value is a maximum Doppler frequency shift value of an area in which a terminal device is located, and the value of N is determined by the network device based on the Doppler frequency shift value. The processing unit 1200 is configured to perform, based on the value of N, M x N-point inverse discrete Fourier transform IDFT processing on a QAM signal generated after quadrature amplitude modulation QAM mapping is performed on first information, to obtain a first data matrix, where the first data matrix is a data matrix with N rows and M columns, and N and M are positive integers. The processing unit 1200 is further configured to determine a two-dimensional reordered pattern based on the Doppler frequency shift value and the value of N, where the two-dimensional reordered pattern is used to reorder a row order of the first data matrix. The processing unit 1200 is further configured to reorder the row order of the first data matrix based on the two-dimensional reordered pattern, to generate a second data matrix. The sending unit 1300 is configured to send the second data matrix to the network device.

Optionally, the processing unit 1200 is further configured to perform M-point discrete Fourier transform DFT processing on each row of data in the second data matrix, to obtain a third data matrix. The sending unit 1300 is further configured to send the third data matrix to the network device.

Optionally, the processing unit 1200 is further configured to perform M-point IDFT processing on each row of data in the third data matrix, or perform N x M-point IDFT processing on all data in the third data matrix, to obtain a fourth data matrix. The sending unit 1300 is further configured to send the fourth data matrix to the network device.

Optionally, the sending unit 1300 and the receiving unit 1100 may alternatively be integrated into a transceiver unit, which has both a receiving function and a sending function. This is not limited herein.

In an implementation, the communication apparatus 1000 may be the terminal device in the method embodiments. In this implementation, the sending unit 1300 may be a transmitter, and the receiving unit 1100 may be a receiver. Alternatively, the receiver and the transmitter may be integrated into a transceiver. The processing unit 1200 may be a processing apparatus.

In another implementation, the communication apparatus 1000 may be a chip or an integrated circuit installed in the terminal device. In this implementation, the sending unit 1300 and the receiving unit 1100 may be communication interfaces or interface circuits. For example, the sending unit 1100 is an output interface or an output circuit, the receiving unit 1100 is an input interface or an input circuit, and the processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the terminal device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

FIG. 12 is a schematic block diagram of a communication apparatus 2000 according to this application. As shown in FIG. 12, the communication apparatus 2000 includes a processing unit 2100 and a sending unit 2200.

The processing unit 2100 is configured to determine a Doppler frequency shift value, where the Doppler frequency shift value is a maximum Doppler frequency shift value of an area in which a terminal device is located. The processing unit 2100 is further configured to determine a value of N based on the Doppler frequency shift value, where the value of N is used to determine a quantity of rows in a first data matrix, the first data matrix is a data matrix obtained by performing M x N-point inverse discrete Fourier transform IDFT processing on a QAM signal generated after quadrature amplitude modulation QAM mapping is performed by the terminal device on first information, the first data matrix is a matrix with N rows and M columns, and both N and M are positive integers. The processing unit 2100 is further configured to determine a two-dimensional reordered pattern based on the Doppler frequency shift value and the value of N, where the two-dimensional reordered pattern is used to reorder a row order of the N-row data matrix. The sending unit 2200 is configured to send the Doppler frequency shift value and the value of N to the terminal device.

Optionally, the communication apparatus 2000 may further include a receiving unit 2300, configured to perform a receiving action performed by the network device.

Optionally, the receiving unit 2300 is configured to receive a second data matrix sent by the terminal device, where the second data matrix is generated by the terminal device by reordering the row order of the first data matrix based on the two-dimensional reordered pattern. The processing unit 2100 is further configured to perform reverse reordering on a row order of the second data matrix based on the two-dimensional re-ordered pattern, to obtain the first data matrix. The processing unit 2100 is further configured to perform N-point DFT processing on each column of the first data matrix, to obtain the QAM signal. The processing unit 2100 is further configured to perform QAM demapping on the QAM signal to obtain the first information.

Optionally, the receiving unit 2300 is further configured to receive, by the network device, a third data matrix sent by the terminal device, where the third data matrix is obtained by performing M-point discrete Fourier transform DFT processing on each row of data in the second data matrix. The processing unit 2100 is further configured to perform M-point IDFT processing on each row of data in the third data matrix, to obtain the second data matrix.

Optionally, the receiving unit 2300 is further configured to receive a fourth data matrix sent by the terminal device, where the fourth data matrix is a data matrix obtained by performing M-point IDFT processing on each row of data in the third data matrix or performing N x M-point IDFT processing on all data in the fourth data matrix. The processing unit 2100 is further configured to perform DFI processing based on the IDFT transformation manner used to obtain the fourth data matrix, to obtain the third data matrix.

Optionally, the sending unit 2200 and the receiving unit 2300 may alternatively be integrated into a transceiver unit, which has both a receiving function and a sending function. This is not limited herein.

In an implementation, the communication apparatus 2000 may be the network device in the method embodiments. In this implementation, the sending unit 2200 may be a transmitter, and the receiving unit 2300 may be a receiver. Alternatively, the receiver and the transmitter may be integrated into a transceiver. The processing unit 2100 may be a processing apparatus.

In another implementation, the communication apparatus 2000 may be a chip or an integrated circuit installed in the network device. In this implementation, the sending unit 2200 and the receiving unit 2300 may be communication interfaces or interface circuits. For example, the sending unit 2200 is an output interface or an output circuit, the receiving unit 2300 is an input interface or an input circuit, and the processing unit 2100 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 2000 performs an operation and/or processing performed by the network device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

FIG. 13 is a schematic diagram of a structure of a communication apparatus 10 according to this application. As shown in FIG. 13, the communication apparatus 10 includes one or more processors 11, one or more memories 12, and one or more communication interfaces 13. The processor 11 is configured to control the communication interface 13 to receive and send signals. The memory 12 is configured to store a computer program. The processor 11 is configured to invoke the computer program from the memory 12 and run the computer program, so that procedures and/or operations performed by the terminal device in the method embodiments of this application are performed.

For example, the processor 11 may have a function of the processing unit 1200 shown in FIG. 11, and the communication interface 13 may have a function of the sending unit 1300 and/or the receiving unit 1100 shown in FIG. 11. Specifically, the processor 11 may be configured to perform processing or operations performed internally by the terminal device in the method embodiments of this application, and the communication interface 13 is configured to perform sending and/or receiving actions performed by the terminal device in the method embodiments of this application.

In an implementation, the communication apparatus 10 may be the terminal device in the method embodiments. In this implementation, the communication interface 13 may be a transceiver. The transceiver may include a receiver and a transmitter.

Optionally, the processor 11 may be a baseband apparatus, and the communication interface 13 may be a radio frequency apparatus.

In another implementation, the communication apparatus 10 may be a chip installed in the terminal device. In this implementation, the communication interface 13 may be an interface circuit or an input/output interface.

FIG. 14 is a schematic diagram of a structure of a communication apparatus 20 according to this application. As shown in FIG. 14, the communication apparatus 20 includes one or more processors 21, one or more memories 22, and one or more communication interfaces 23. The processor 21 is configured to control the communication interface 23 to receive and send signals. The memory 22 is configured to store a computer program. The processor 21 is configured to invoke the computer program from the memory 22 and run the computer program, so that procedures and/or operations performed by the network device in the method embodiments of this application are performed.

For example, the processor 21 may have a function of the processing unit 2100 shown in FIG. 12, and the communication interface 23 may have functions of the sending unit 2200 and the receiving unit 2300 shown in FIG. 12. Specifically, the processor 21 may be configured to perform processing or operations performed internally by the network device in the method embodiments of this application, and the communication interface 23 is configured to perform sending and/or receiving actions performed by the network device in the method embodiments of this application.

Optionally, the processor and the memory in the foregoing apparatus embodiments may be physically independent units. Alternatively, the memory may be integrated with the processor. This is not limited in this specification.

In addition, this application further provides a computer-readable storage medium. The computer-readable storage medium stores computer instructions. When the computer instructions are run on a computer, operations and/or procedures performed by the terminal device in the method embodiments of this application are performed.

This application further provides a computer-readable storage medium. The computer-readable storage medium stores computer instructions. When the computer instructions are run on a computer, operations and/or procedures performed by the network device in the method embodiments of this application are performed.

This application further provides a computer program product. The computer program product includes computer program code or instructions. When the computer program code or the instructions is/are run on a computer, operations and/or procedures performed by the terminal device in the method embodiments of this application are performed.

This application further provides a computer program product. The computer program product includes computer program code or instructions. When the computer program code or the instructions is/are run on a computer, operations and/or procedures performed by the network device in the method embodiments of this application are performed.

In addition, this application further provides a chip. The chip includes a processor. A memory configured to store a computer program is disposed independent of the chip. The processor is configured to execute the computer program stored in the memory, to perform operations and/or processing performed by the terminal device in any method embodiment.

Further, the chip may include a communication interface. The communication interface may be an input/output interface, an interface circuit, or the like. Further, the chip may include the memory.

This application further provides a chip including a processor. A memory configured to store a computer program is disposed independent of the chip. The processor is configured to execute the computer program stored in the memory, to perform operations and/or processing performed by the network device in any method embodiment.

Further, the chip may include a communication interface. The communication interface may be an input/output interface, an interface circuit, or the like. Further, the chip may include the memory.

In addition, this application further provides a communication system, including the terminal device and the network device in embodiments of this application.

A processor in embodiments of this application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. Steps of the methods disclosed with reference to embodiments of this application may be directly executed and accomplished by a hardware encoding processor, or may be executed and accomplished by using a combination of hardware and software modules in the encoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

A memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

The term "and/or" in this application describes only an association relationship between associated objects and represents that three relationships may exist. For example, A and/or B may represent the following three cases: Only A exists, both A and B exist, and only B exists. A, B, and C each may be singular or plural. This is not limited.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, comprising:

receiving, by a terminal device, a Doppler frequency shift value and a value of N that are sent by a network device, wherein the Doppler frequency shift value is a maximum Doppler frequency shift value of an area in which the terminal device is located, the value of N is determined by the network device based on the Doppler frequency shift value, and N is a positive integer;
performing, by the terminal device based on the value of N, M x N-point inverse discrete Fourier transform IDFT processing on a QAM signal generated after quadrature amplitude modulation QAM mapping is performed on first information, to obtain a first data matrix, wherein the first data matrix is a data matrix with N rows and M columns, and M is a positive integer;
determining, by the terminal device, a two-dimensional reordered pattern based on the Doppler frequency shift value and the value of N, wherein the two-dimensional reordered pattern is used to reorder a row order of the first data matrix;
reordering, by the terminal device, the row order of the first data matrix based on the two-dimensional reordered pattern, to generate a second data matrix; and
sending, by the terminal device, the second data matrix to the network device.

**2.** The method according to claim 1, wherein the method further comprises:

performing, by the terminal device, M-point discrete Fourier transform DFT processing on each row of data in the second data matrix, to obtain a third data matrix; and
sending, by the terminal device, the third data matrix to the network device.

**3.** The method according to claim 2, wherein the method further comprises:

performing, by the terminal device, M-point IDFT processing on each row of data in the third data matrix, or performing, by the terminal device, N x M-point IDFT processing on all data in the third data matrix, to obtain a fourth data matrix; and
sending, by the terminal device, the fourth data matrix to the network device.

**4.** A communication method, comprising:

determining, by a network device, a Doppler frequency shift value, wherein the Doppler frequency shift value is a maximum Doppler frequency shift value of an area in which a terminal device is located;
determining, by the network device, a value of N based on the Doppler frequency shift value, wherein the value of N is used to determine a quantity of rows in a first data matrix, the first data matrix is a data matrix obtained by performing M x N-point inverse discrete Fourier transform IDFT processing on a QAM signal generated after quadrature amplitude modulation QAM mapping is performed by the terminal device on first information, the first data matrix is a matrix with N rows and M columns, and both N and M are positive integers;
determining, by the network device, a two-dimensional reordered pattern based on the Doppler frequency shift value and the value of N, wherein the two-dimensional reordered pattern is used to reorder a row order of the N-row data matrix; and
sending, by the network device, the Doppler frequency shift value and the value of N to the terminal device.

**5.** The method according to claim 4, wherein the method further comprises:

receiving, by the network device, a second data matrix sent by the terminal device, wherein the second data matrix is generated by the terminal device by reordering the row order of the first data matrix based on the two-dimensional reordered pattern;

performing, by the network device, reverse reordering on a row order of the second data matrix based on the two-dimensional reordered pattern, to obtain the first data matrix;
performing, by the network device, N-point DFT processing on each column of the first data matrix, to obtain the QAM signal; and
performing, by the network device, QAM demapping on the QAM signal to obtain the first information.

**6.** The method according to claim 4 or 5, wherein the method further comprises:

receiving, by the network device, a third data matrix sent by the terminal device, wherein the third data matrix is obtained by performing M-point discrete Fourier transform DFT processing on each row of data in the second data matrix; and
performing, by the network device, M-point IDFT processing on each row of data in the third data matrix, to obtain the second data matrix.

**7.** The method according to claim 6, wherein the method further comprises:

receiving, by the network device, a fourth data matrix sent by the terminal device, wherein the fourth data matrix is a data matrix obtained by performing M-point IDFT processing on each row of data in the third data matrix or performing N x M-point IDFT processing on all data in the fourth data matrix; and
performing, by the network device, DFI processing based on an IDFT transformation manner used to obtain the fourth data matrix, to obtain the third data matrix.

**8.** A communication apparatus, comprising:

a receiving unit, configured to receive a Doppler frequency shift value and a value of N that are sent by a network device, wherein the Doppler frequency shift value is a maximum Doppler frequency shift value of an area in which the terminal device is located, the value of N is determined by the network device based on the Doppler frequency shift value, and N is a positive integer;
a processing unit, configured to perform, based on the value of N, M × N-point inverse discrete Fourier transform IDFT processing on a QAM signal generated after quadrature amplitude modulation QAM mapping is performed on first information, to obtain a first data matrix, wherein the first data matrix is a data matrix with N rows and M columns, and M is a positive integer, wherein
the processing unit is further configured to determine a two-dimensional reordered pattern based on the Doppler frequency shift value and the value of N, wherein the two-dimensional reordered pattern is used to reorder a row order of the first data matrix; and
the processing unit is further configured to reorder the row order of the first data matrix based on the two-dimensional reordered pattern, to generate a second data matrix; and
a sending unit, configured to send the second data matrix to the network device.

**9.** The apparatus according to claim 8, wherein the processing unit is further configured to perform M-point discrete Fourier transform DFT processing on each row of data in the second data matrix, to obtain a third data matrix; and the sending unit is further configured to send the third data matrix to the network device.

**10.** The apparatus according to claim 9, wherein the processing unit is further configured to perform M-point IDFT processing on each row of data in the third data matrix, or perform N x M-point IDFT processing on all data in the third data matrix, to obtain a fourth data matrix; and
the sending unit is further configured to send the fourth data matrix to the network device.

**11.** A communication apparatus, comprising:

a processing unit, configured to determine a Doppler frequency shift value, wherein the Doppler frequency shift value is a maximum Doppler frequency shift value of an area in which a terminal device is located, wherein
the processing unit is further configured to determine a value of N based on the Doppler frequency shift value, the value of N is used to determine a quantity of rows in a first data matrix, the first data matrix is a data matrix obtained by performing M x N-point inverse discrete Fourier transform IDFT processing on a QAM signal generated after quadrature amplitude modulation QAM mapping is performed by the terminal device on first information, the first data matrix is a matrix with N rows and M columns, and both N and M are positive integers; and
the processing unit is further configured to determine a two-dimensional reordered pattern based on the Doppler frequency shift value and the value of N, wherein the two-dimensional reordered pattern is used to reorder a row order of an N-row data matrix; and
a sending unit, configured to send the Doppler frequency shift value and the value of N to the terminal device.

**12.** The apparatus according to claim 11, wherein the apparatus further comprises a receiving unit, configured to receive a second data matrix sent by the terminal device, wherein the second data matrix is generated by the terminal device by reordering the row order of the first data matrix based on the two-dimensional reordered pattern;

the processing unit is further configured to perform reverse reordering on a row order of the second data matrix based on the two-dimensional reordered pattern, to obtain the first data matrix;
the processing unit is further configured to perform N-point DFT processing on each column of the first data matrix to obtain the QAM signal; and
the processing unit is further configured to perform QAM demapping on the QAM signal to obtain the first information.

**13.** The apparatus according to claim 11 or 12, wherein the receiving unit is further configured to receive, by a network device, a third data matrix sent by the terminal device, wherein the third data matrix is obtained by performing M-point discrete Fourier transform DFT processing on each row of data in the second data matrix; and
the processing unit is further configured to perform M-point IDFT processing on each row of data in the third data matrix, to obtain the second data matrix.

**14.** The apparatus according to claim 13, wherein the receiving unit is further configured to receive a fourth data matrix sent by the terminal device, wherein the fourth data matrix is a data matrix obtained by performing M-point IDFT processing on each row of data in the third data matrix or performing N x M-point IDFT processing on all data in the fourth data matrix; and
the processing unit is further configured to perform DFI processing based on an IDFT transformation manner used to obtain the fourth data matrix, to obtain the third data matrix.

**15.** A communication apparatus, comprising at least one processor, wherein the at least one processor is coupled to at least one memory, and the at least one processor is configured to execute a computer program or instructions stored in the at least one memory, so that the communication apparatus is enabled to implement the method according to any one of claims 1 to 3, or the communication apparatus is enabled to implement the method according to any one of claims 4 to 7.

**16.** A computer-readable storage medium, wherein the computer-readable storage medium stores computer instructions, and when the computer instructions are run on a computer, the method according to any one of claims 1 to 3 is implemented, or the method according to any one of claims 4 to 7 is implemented.

**17.** A computer program product, wherein the computer program product comprises computer program code, and when the computer program code is run on a computer, the method according to any one of claims 1 to 3 is implemented, or the method according to any one of claims 4 to 7 is implemented.

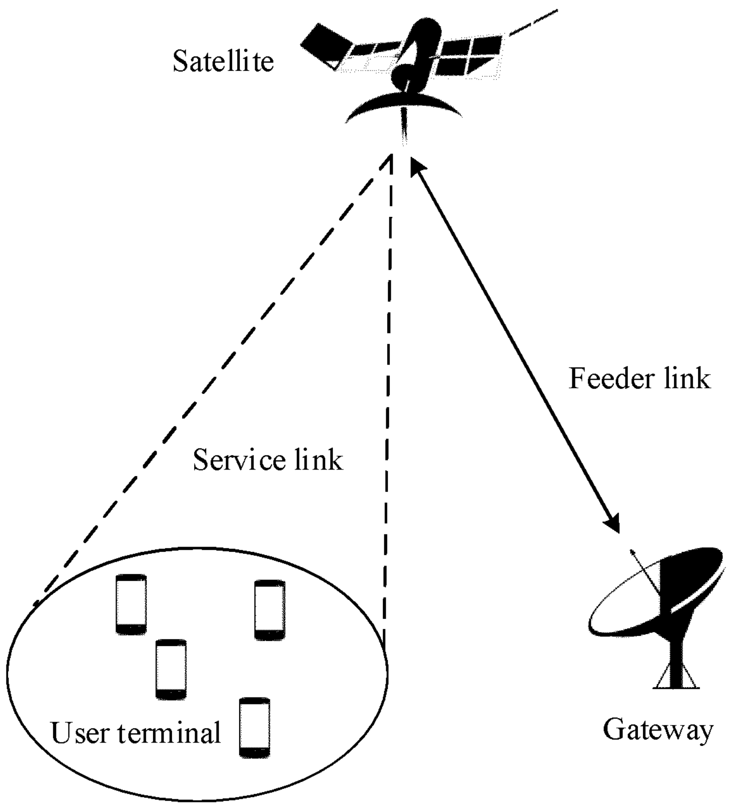


FIG. 1

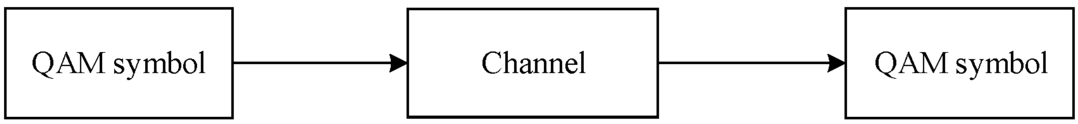


FIG. 2

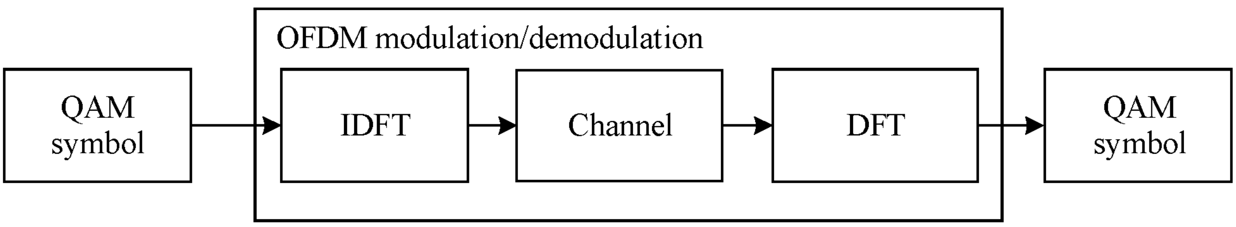


FIG. 3

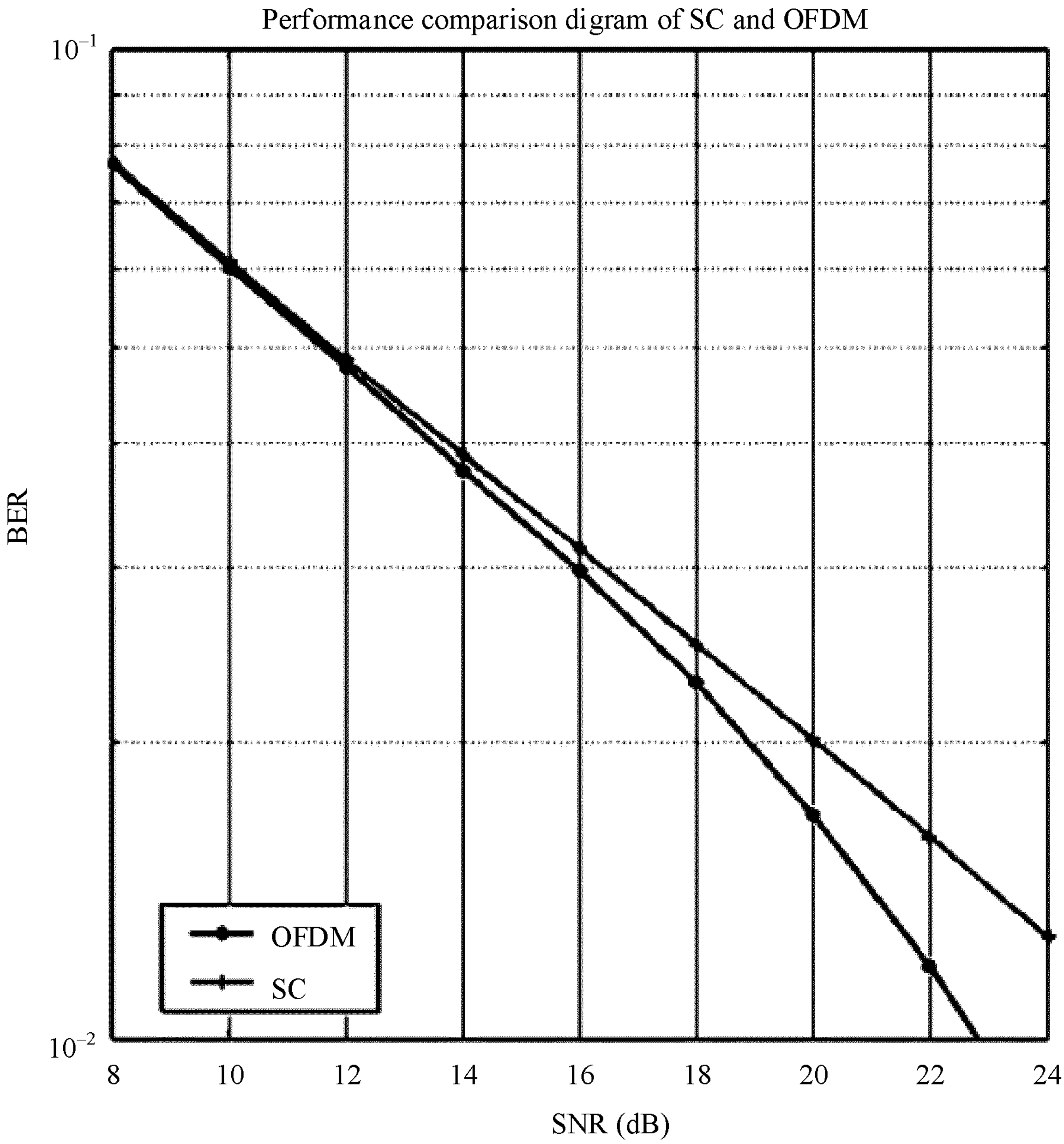
Performance comparison digram of SC and OFDM
$10^{-1}$
$10^{-2}$
BER
SNR (dB)
8
10
12
14
16
18
20
22
24
OFDM
SC

FIG. 4

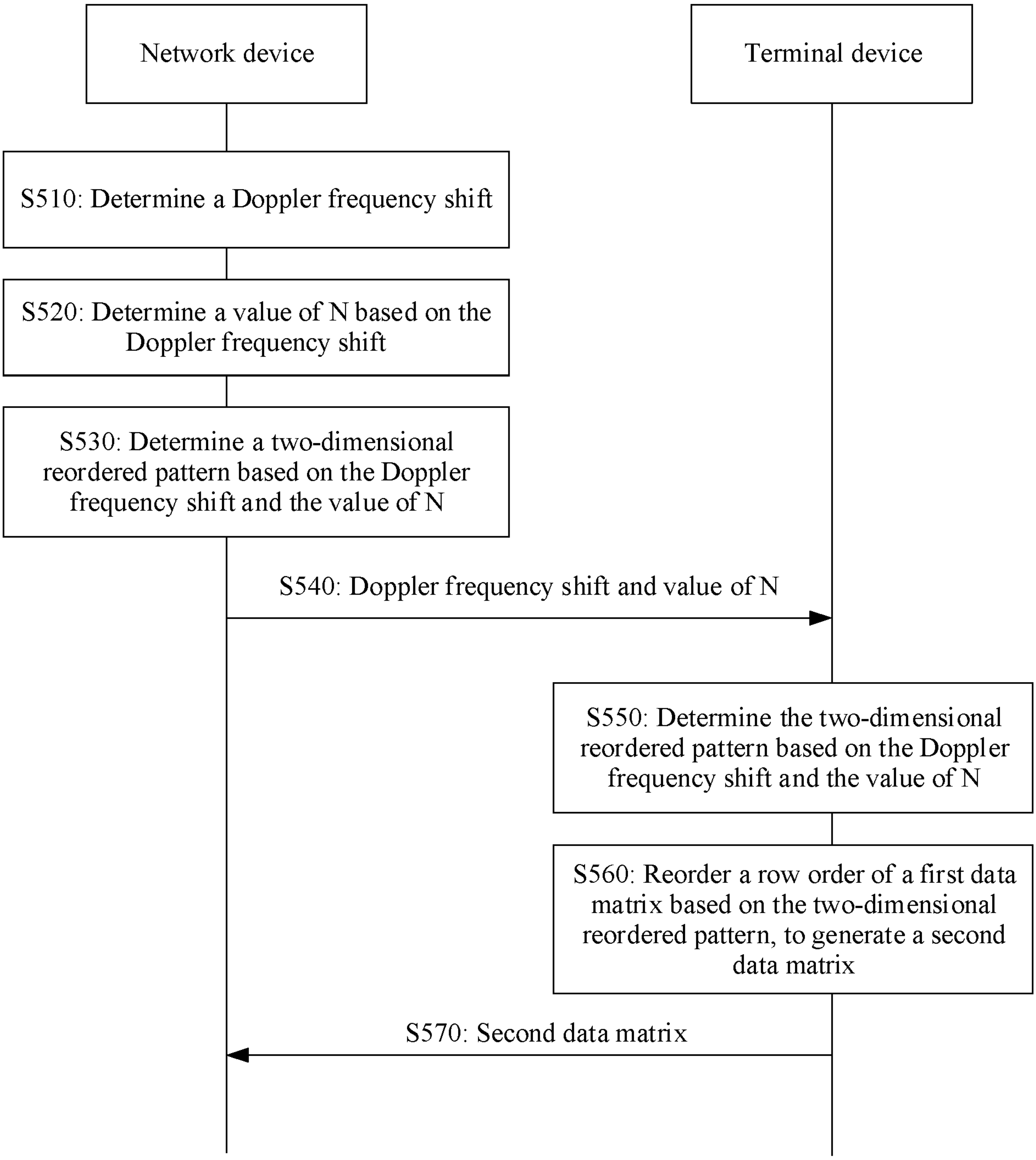
Network device
Terminal device
S510: Determine a Doppler frequency shift
S520: Determine a value of N based on the Doppler frequency shift
S530: Determine a two-dimensional reordered pattern based on the Doppler frequency shift and the value of N
S540: Doppler frequency shift and value of N
S550: Determine the two-dimensional reordered pattern based on the Doppler frequency shift and the value of N
S560: Reorder a row order of a first data matrix based on the two-dimensional reordered pattern, to generate a second data matrix
S570: Second data matrix

FIG. 5

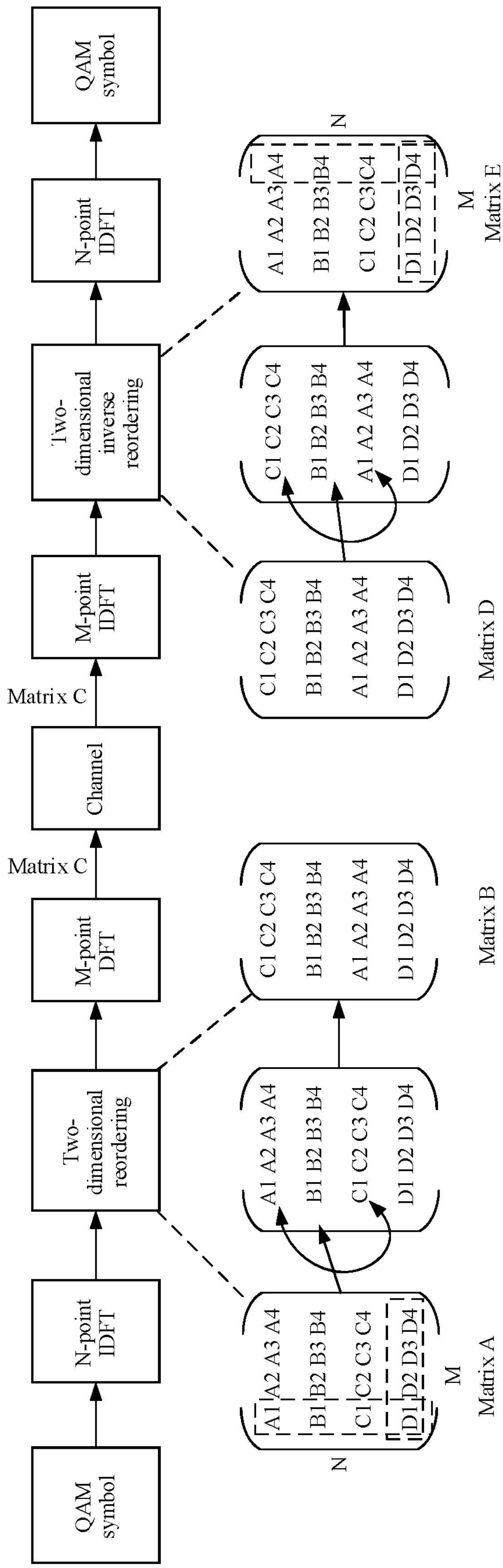
QAM symbol
N-point IDFT
Two-dimensional reordering
M-point DFT
Matrix C
Channel
Matrix C
M-point IDFT
Two-dimensional inverse reordering
N-point IDFT
QAM symbol
Matrix A
Matrix B
Matrix D
Matrix E
M
N
A1 A2 A3 A4
B1 B2 B3 B4
C1 C2 C3 C4
D1 D2 D3 D4

FIG. 6

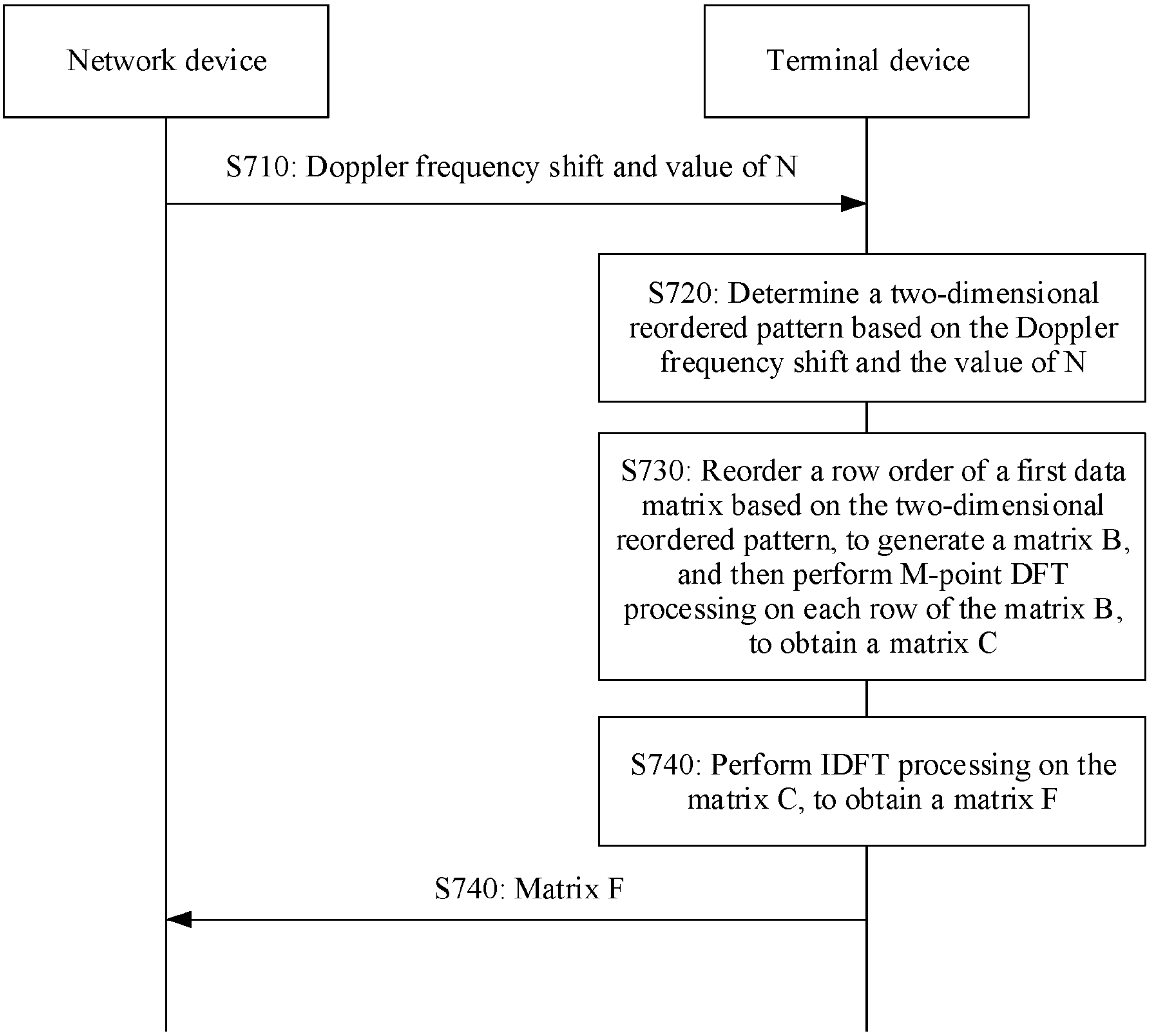
Network device
Terminal device
S710: Doppler frequency shift and value of N
S720: Determine a two-dimensional reordered pattern based on the Doppler frequency shift and the value of N
S730: Reorder a row order of a first data matrix based on the two-dimensional reordered pattern, to generate a matrix B, and then perform M-point DFT processing on each row of the matrix B, to obtain a matrix C
S740: Perform IDFT processing on the matrix C, to obtain a matrix F
S740: Matrix F

FIG. 7

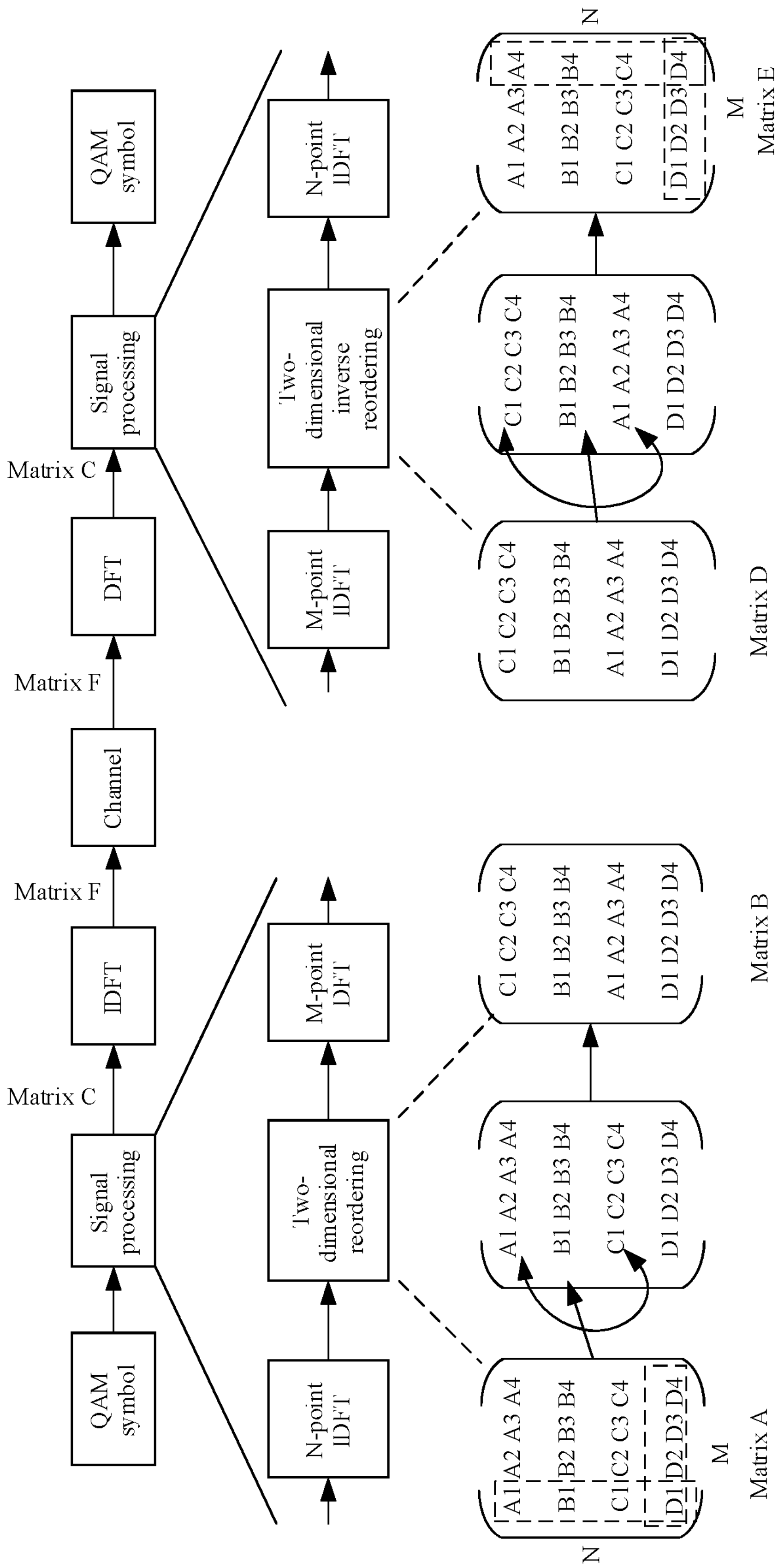
QAM symbol
Signal processing
Matrix C
IDFT
Matrix F
Channel
Matrix F
DFT
Matrix C
Signal processing
QAM symbol
N-point IDFT
Two-dimensional reordering
M-point DFT
M-point IDFT
Two-dimensional inverse reordering
N-point IDFT
A1 A2 A3 A4
B1 B2 B3 B4
C1 C2 C3 C4
D1 D2 D3 D4
N
M
Matrix A
A1 A2 A3 A4
B1 B2 B3 B4
C1 C2 C3 C4
D1 D2 D3 D4
C1 C2 C3 C4
B1 B2 B3 B4
A1 A2 A3 A4
D1 D2 D3 D4
Matrix B
C1 C2 C3 C4
B1 B2 B3 B4
A1 A2 A3 A4
D1 D2 D3 D4
Matrix D
C1 C2 C3 C4
B1 B2 B3 B4
A1 A2 A3 A4
D1 D2 D3 D4
A1 A2 A3 A4
B1 B2 B3 B4
C1 C2 C3 C4
D1 D2 D3 D4
N
M
Matrix E

FIG. 8

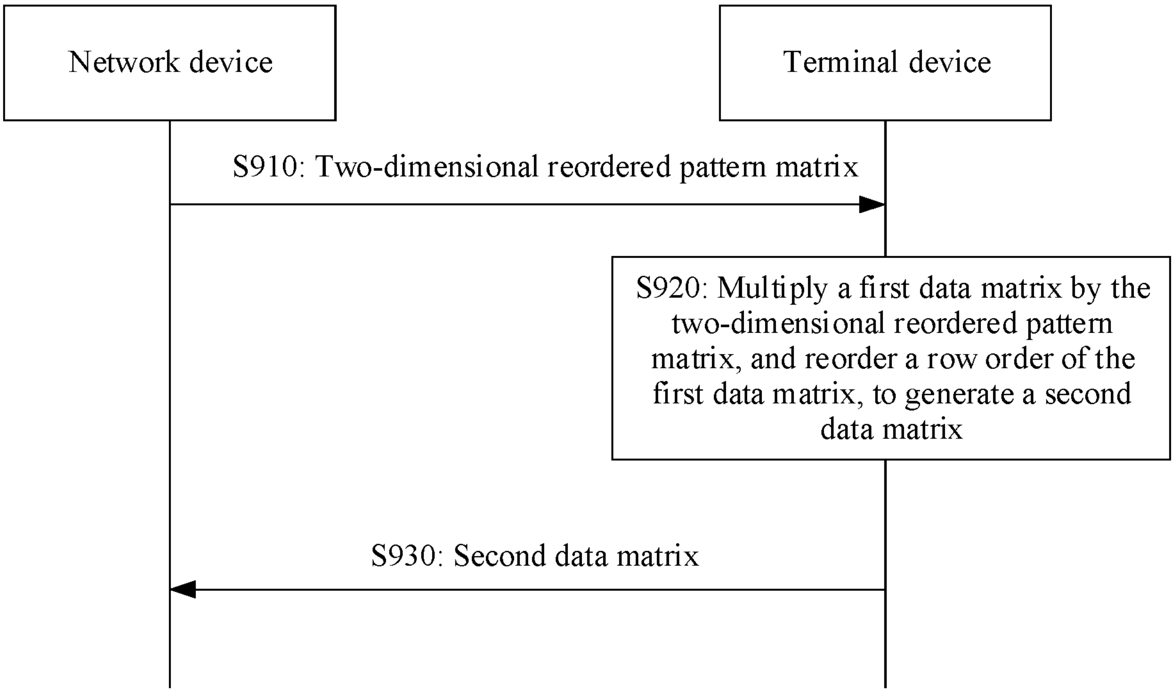
Network device
Terminal device
S910: Two-dimensional reordered pattern matrix
S920: Multiply a first data matrix by the two-dimensional reordered pattern matrix, and reorder a row order of the first data matrix, to generate a second data matrix
S930: Second data matrix

FIG. 9

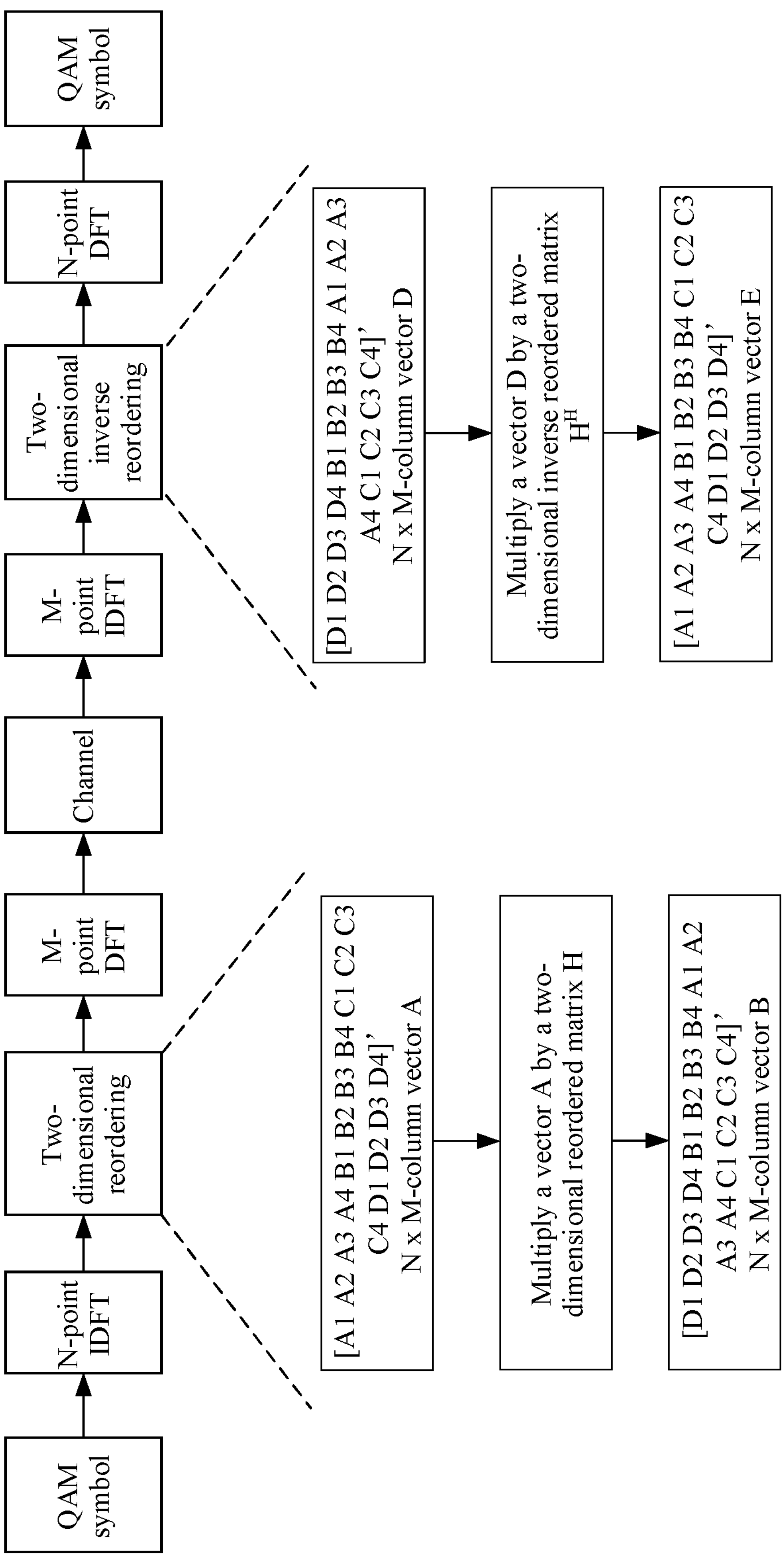
QAM symbol
N-point IDFT
Two-dimensional reordering
M-point DFT
Channel
M-point IDFT
Two-dimensional inverse reordering
N-point DFT
QAM symbol
[A1 A2 A3 A4 B1 B2 B3 B4 C1 C2 C3 C4 D1 D2 D3 D4]'
N x M-column vector A
Multiply a vector A by a two-dimensional reordered matrix H
[D1 D2 D3 D4 B1 B2 B3 B4 A1 A2 A3 A4 C1 C2 C3 C4]'
N x M-column vector B
[D1 D2 D3 D4 B1 B2 B3 B4 A1 A2 A3 A4 C1 C2 C3 C4]'
N x M-column vector D
Multiply a vector D by a two-dimensional inverse reordered matrix $H^H$
[A1 A2 A3 A4 B1 B2 B3 B4 C1 C2 C3 C4 D1 D2 D3 D4]'
N x M-column vector E

FIG. 10

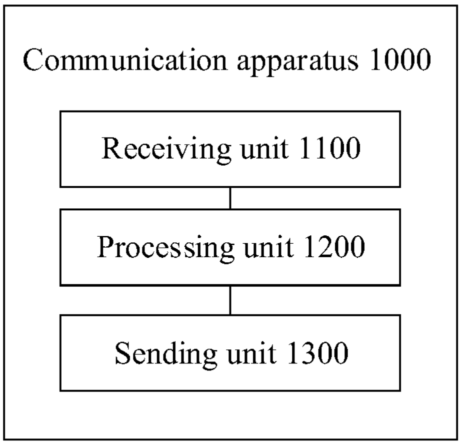
Communication apparatus 1000
Receiving unit 1100
Processing unit 1200
Sending unit 1300

FIG. 11

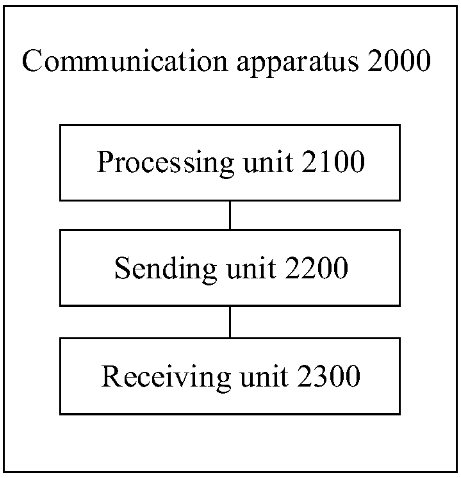
Communication apparatus 2000
Processing unit 2100
Sending unit 2200
Receiving unit 2300

FIG. 12

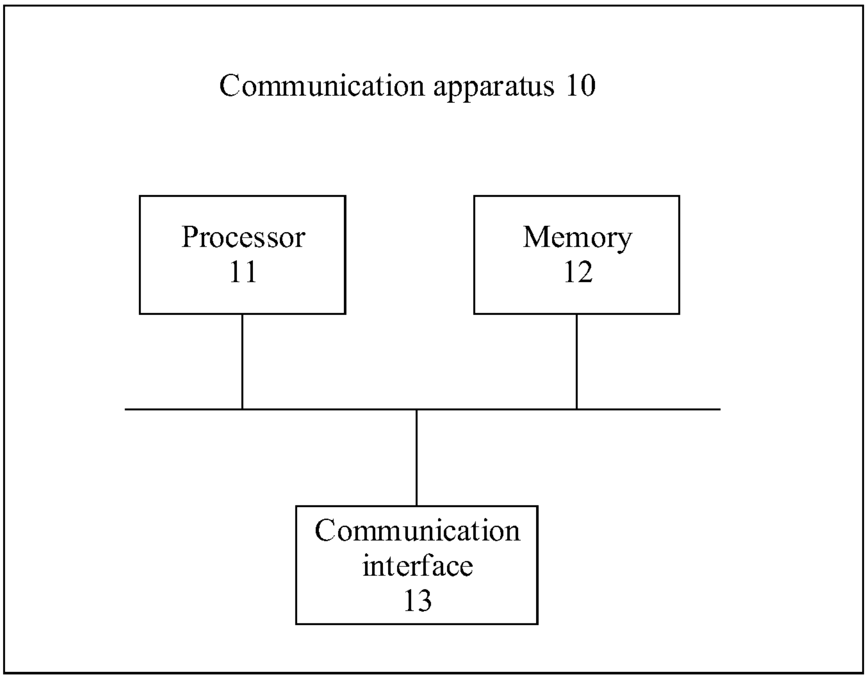
Communication apparatus 10
Processor
11
Memory
12
Communication
interface
13

FIG. 13

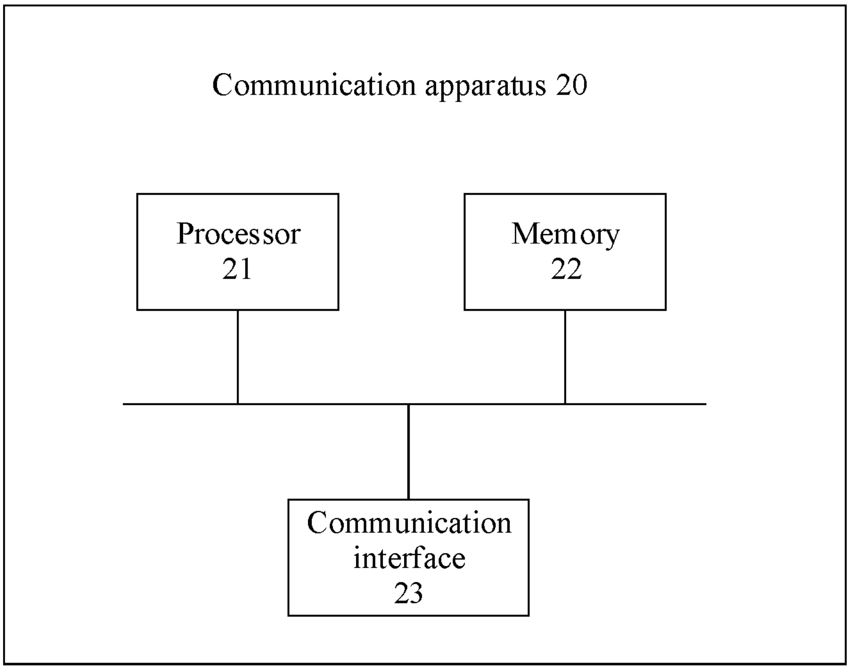
Communication apparatus 20
Processor
21
Memory
22
Communication
interface
23

FIG. 14

**INTERNATIONAL SEARCH REPORT**

International application No.
**PCT/CN2021/121506**

**A. CLASSIFICATION OF SUBJECT MATTER**

H04B 7/185(2006.01)i; H04L 27/00(2006.01)i; H04L 27/34(2006.01)i

According to International Patent Classification (IPC) or to both national classification and IPC

**B. FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; WOTXT; USTXT: 抗, 降低, 影响, 性能, 随机, 低 s 复杂度, 多普勒, 矩阵, 行, 顺序, 排列, 重排, 排序, IDFT, DFT, Doppler, matrix, row, rank, order, arrange

**C. DOCUMENTS CONSIDERED TO BE RELEVANT**

| Category* | Citation of document, with indication, where appropriate, of the relevant passages | Relevant to claim No. |
|---|---|---|
| A | CN 104849711 A (DALIAN UNIVERSITY OF TECHNOLOGY) 19 August 2015 (2015-08-19)<br>description, paragraphs [0004]-[0047] | 1-17 |
| A | CN 109302240 A (NORTHWESTERN POLYTECHNICAL UNIVERSITY) 01 February 2019 (2019-02-01)<br>entire document | 1-17 |
| A | CN 103051571 A (TONGJI UNIVERSITY) 17 April 2013 (2013-04-17)<br>entire document | 1-17 |
| A | US 2013230128 A1 (TSAI YUH-REN et al.) 05 September 2013 (2013-09-05)<br>entire document | 1-17 |
| A | US 2011007783 A1 (MAGELLAN SYSTEMS JAPAN INC.) 13 January 2011 (2011-01-13)<br>entire document | 1-17 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 November 2021** | **06 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/121506**

| Patent document cited in search report | | | Publication date (day/month/year) | Patent family member(s) | | | Publication date (day/month/year) |
|---|---|---|---|---|---|---|---|
| CN | 104849711 | A | 19 August 2015 | None | | | |
| CN | 109302240 | A | 01 February 2019 | CN | 109302240 | B | 23 March 2021 |
| CN | 103051571 | A | 17 April 2013 | CN | 103051571 | B | 18 May 2016 |
| US | 2013230128 | A1 | 05 September 2013 | TW | 201338443 | A | 16 September 2013 |
| US | 2011007783 | A1 | 13 January 2011 | WO | 2009108915 | A2 | 03 September 2009 |
| | | | | WO | 2009108915 | A3 | 22 October 2009 |
| | | | | HK | 1155228 | A1 | 11 May 2012 |
| | | | | US | 8331422 | B2 | 11 December 2012 |
| | | | | TW | 200951475 | A | 16 December 2009 |
| | | | | TW | I551879 | B | 01 October 2016 |
| | | | | EP | 2288930 | A2 | 02 March 2011 |
| | | | | EP | 2288930 | A4 | 07 September 2011 |
| | | | | EP | 2288930 | B1 | 11 December 2013 |
| | | | | US | 2013064270 | A1 | 14 March 2013 |
| | | | | US | 8542718 | B2 | 24 September 2013 |
| | | | | HK | 1155228 | A0 | 11 May 2012 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202011106681